# FASCICULE DE BREVET EUROPEEN

(11) **EP 3 172 353 B1**
(45) Date de publication et mention de la délivrance du brevet: **13.06.2018**
(21) Numéro de dépôt: 15756195.2
(22) Date de dépôt: 16.07.2015
(51) Int. Cl.: C23C 8/80, B23K 9/235, B23K 103/04, B23K 26/00, B23K 26/21, B23K 26/32, B23K 26/352, B23K 26/60, B23K 9/167, B23K 9/23, C21D 10/00, C23C 8/26, C23C 8/28

(54) **PROCÉDÉ DE TRAITEMENT D'UNE PIÈCE NITRURÉE/NITROCARBURÉE**
VERFAHREN ZUR BEHANDLUNG EINES NITRIERTEN/NITROAUFGEKOHLTEN TEILS
METHOD FOR TREATING A NITRIDED/NITROCARBURISED PART

(30) Priorité: 21.07.2014 FR 1457028
(43) Date de publication de la demande: 31.05.2017
(73) Titulaire: H.E.F., 42160 Andrezieux-Boutheon (FR)
(72) Inventeur: GRANDJEAN, Stéphan, F-42370 Saint Andre D'apchon (FR); PROST, Fabrice, F-42000 Saint-etienne (FR)
(74) Mandataire: Cabinet Laurent & Charras
(86) Numéro de dépôt international: PCT/FR2015/051944
(87) Numéro de publication internationale: WO 2016/012697

(56) Documents cités:
- EP-A1- 0 696 648
- EP-A1- 2 460 906
- US-A1- 2007 102 068
- US-A1- 2007 116 889
- US-A1- 2010 051 141
- US-A1- 2013 087 534
- HONGPING GU ET AL: "Laser Beam Welding of Nitride Steel Components", PHYSICS PROCEDIA, vol. 12, 15 avril 2011 (2011-04-15), pages 40-45, XP028379940, ISSN: 1875-3892, DOI: 10.1016/J.PHPRO.2011.03.006 [extrait le 2011-04-15]

## Description

L'invention concerne un procédé de traitement d'une pièce d'acier nitrurée.

On rappelle de manière parfaitement connue pour un homme du métier, que la nitruration/nitrocarburation est une diffusion de l'azote sur une surface de pièce métallique généralement préalablement traitée, par exemple, par trempe et revenu. L'insertion de l'azote et la formation de nitrures avec les éléments d'alliage de l'acier provoquent un durcissement de surface apportant les propriétés recherchées, par exemple, une dureté superficielle de 750 à 1100 HV pour la plupart des aciers.

Différents procédés peuvent être utilisés pour réaliser une opération de nitruration en tant que telle, parmi lesquels on peut citer, gazeux, basse pression, bains de sel, ionique... Quant à la nitruration ionique, cette dernière est réalisée en four sous vide par un flux contrôlé de gaz actif, dissocié par plasma.

Pour l'essentiel, la couche nitrurée comporte en surface une couche dite de combinaison ou couche blanche où l'azote peut être combinée sous forme de nitrure de fer de très grande dureté afin de favoriser le frottement tout en augmentant la résistance à l'usure et au grippage. Sous la couche de combinaison dont l'épaisseur peut être de l'ordre de 5 à 25 µm, apparait une couche de diffusion sous-jacente assurant une résistance à la fatigue et renforçant la résistance à l'usure. La composition et l'épaisseur des couches dépendent de la nuance de l'acier considéré et des paramètres de traitement.

La nitruration est particulièrement recherchée pour augmenter la résistance à la fatigue, à l'usure, au grippage d'une pièce en acier. Toutefois, des essais ont démontré que l'azote est particulièrement néfaste pour la soudabilité, étant donné qu'apparaissent des défauts de porosité et de soufflure au niveau de la couche superficielle. Ainsi, des essais effectués en TIG et en soudage par faisceau laser sur des pièces XC48 préalablement soumises à une opération de nitruration, ont démontré que cette nitruration influence fortement les opérations de soudage quel que soit le procédé. Les cordons de soudure sont irréguliers avec apparition de soufflure en quantité et taille importantes.

Il est donc apparu important pour permettre de réaliser dans de bonnes conditions la soudure de pièces nitrurées ou nitrocarburées, de transformer la couche superficielle au niveau de la partie de la pièce où doit être réalisée la soudure.

Différentes solutions, notamment d'épargne, ont été proposées pour réaliser une soudure sur une pièce devant être nitrurée.

Par exemple, il a été proposé de réaliser un masquage mécanique qui, généralement s'effectue en deux phases dont l'une, est réalisée en amont du traitement de nitruration/nitrocarburation pour positionner un masque et l'autre, en aval pour le retirer. Un tel procédé est difficile à mettre en oeuvre sur des formes complexes. On note également l'usure et le coût des masques et le coût des opérations de montage en amont et de démontage en aval.

Il a également été proposé, toujours dans des cas nitruration et nitrocarburation un masquage par de la peinture à base de cuivre qui constitue une barrière efficace aux composés d'azote ou de carbone. Il s'avère toutefois qu'un tel procédé est onéreux, de mise en oeuvre relativement longue en considérant le temps de séchage nécessaire au traitement puis à la suppression. On observe également des contraintes résiduelles qui peuvent être générées et créer des déformations. A noter également que ce type de solution n'est réalisable que dans le cas de nitruration gazeux et/ou ionique, mais ne peut pas être réalisable dans le cas de nitruration en bains de sel.

Il pourrait également être envisagé d'effectuer, au niveau de la zone de la couche de combinaison qu'il convient de transformer, des opérations d'usinage du type tournage, fraisage. Toutefois, ces opérations sont difficilement applicables dans le cas de zones complexes ou de zones multiples.

On observe également qu'une simple suppression mécanique de la couche de combinaison ne permet pas une modification de la concentration d'azote dans la zone de diffusion et donc de garantir une bonne qualité de soudure.

On peut également citer l'enseignement du document WO 2013/0508555 qui concerne un système de nettoyage au moyen d'une source de chaleur à haute énergie pour supprimer un revêtement de surface sur un substrat en vue des opérations de soudage.

Ce document ne concerne pas le traitement d'une pièce nitrurée et n'évoque pas le problème de réaliser la transformation d'une partie au moins de la couche combinaison afin de modifier la structure de la pièce. Le document US2013/0087534 décrit un procédé de traitement d'une pièce notamment d'acier nitrurée ou nitrocarburée avec un laser avant de réaliser une soudure au niveau de la partie de la pièce ainsi traitée.

L'invention s'est fixée pour but de remédier à ces inconvénients de manière simple, sure, efficace et rationnelle.

Le problème que se propose de résoudre l'invention est de pouvoir facilement rendre compatible au soudage tout ou partie d'une pièce d'acier nitrurée/nitrocarburée, en modifiant la structure de la pièce au niveau d'une zone de la couche superficielle où doit être réalisée l'opération de soudure en tant que telle par tout moyen connu et approprié.

Dans la suite de la description, on entend par couche superficielle, au moins la couche de combinaison, considérée en totalité ou en partie, et susceptible de comprendre, également en totalité ou en partie, la couche de diffusion.

Pour résoudre un tel problème il a été conçu et mis au point un procédé de traitement d'une pièce d'acier nitrurée/nitrocarburée selon lequel on soumet une partie au moins de la pièce, à une première étape selon laquelle on déplace un faisceau laser en au moins une passe sur ladite partie, jusqu'à transformation partielle ou totale de la couche superficielle de la partie considérée et modification de la répartition de la concentration de l'azote dans la zone de diffusion.

Il ressort donc de ces caractéristiques que le procédé de traitement permet en une première étape une transformation de la couche superficielle et une modification de la répartition de la concentration de l'azote dans la zone de diffusion, cette première étape étant suffisante pour rendre la zone traitée compatible au soudage.

Des résultats avantageux ont été obtenus lorsque pour la première étape on réalise plusieurs passes avec un interligne entre les passes compris entre 0,01 mm et 0,05 mm. L'interligne est avantageusement de 0,02 mm.

Avantageusement, pour résoudre le problème posé de transformer la couche superficielle et de modifier la répartition de la concentration de l'azote dans la zone de diffusion, on utilise un laser fibré pulsé 20 W réglé à environ 20 KHz et à 50 % de sa puissance, défocalisé de 5 mm et soumis à une vitesse d'avance d'environ 300 mm/s.

A partir de cette caractéristique de base, il est apparu qu'il est également possible d'assurer une modification importante de la concentration d'azote dans la couche de diffusion. Dans ce but, l'on soumet la partie nitrurée au laser pour notamment transformer la couche superficielle, à une deuxième étape selon laquelle on déplace le ou les faisceau(x) laser selon au moins une passe sur ladite partie pour permettre de diminuer la concentration d'azote dans la couche de diffusion sous-jacente.

Pour résoudre le problème posé de modifier la répartition de la concentration de l'azote en réduisant le taux d'azote dans la couche de diffusion, pour cette deuxième étape, le laser fibré pulsé 20 W est réglé à environ 200 KHz et à 100 % de sa puissance, défocalisé de 5 mm et soumis à une vitesse d'avance comprise entre 1 mm/s et 10 mm/s.

Il résulte de ces caractéristiques que l'invention concerne également un procédé de soudage d'une pièce nitrurée/nitrocarburée selon lequel :
- on soumet une partie au moins de la pièce à une première étape selon laquelle on déplace au moins un faisceau laser selon au moins une passe sur ladite partie, jusqu'à transformation partielle ou totale de la couche superficielle de la partie considérée et modification de la répartition de la concentration de l'azote dans la zone de diffusion.
- on soumet la partie au moins traitée par laser pour transformer la couche superficielle, à une deuxième étape selon laquelle on déplace au moins un faisceau laser selon au moins une passe sur ladite partie pour permettre de réduire la concentration d'azote dans la couche de diffusion sous-jacente.
- on réalise une soudure au niveau de la partie traitée de la pièce.

L'invention est exposée ci-après plus en détail à l'aide des figures des dessins annexés dans lesquels :
- La Fig. 1 montre un échantillon d'une pièce dont la face du dessus est nitrurée et présente une zone (A) traitée selon la première étape du procédé selon l'invention et une zone (B) traitée selon les première et deuxième étapes du procédé selon l'invention.
- Les Fig. 2, 2A et 2B présentent des courbes montrant le pourcentage d'azote par rapport à la profondeur au niveau de la zone nitrurée de la pièce (figure 2), de la zone (A) traitée selon la première étape (figure 2A) et de la zone (B) traitée selon les deux étapes du procédé (figure 2B).
- Les Fig 3 et 4 montrent l'aspect d'une soudure TIG, l'une dans le cas d'une surface nitrurée (figure 3) et l'autre dans le cas d'une surface nitrurée dont une zone a été traitée selon la première étape du procédé (figure 4).
- Les Fig. 5 et 6 sont des vues endoscopiques montrant une soudure TIG dans le cas d'une surface nitrurée (figure 5), dans le cas de la surface nitrurée dont une zone a été traitée selon la première étape du procédé (figure 6).
- Les Fig. 7 et 8 sont des vues endoscopiques montrant une soudure laser dans le cas d'une surface nitrurée (figure 7), dans le cas de la surface nitrurée dont une zone a été traitée selon la première étape du procédé (figure 8).

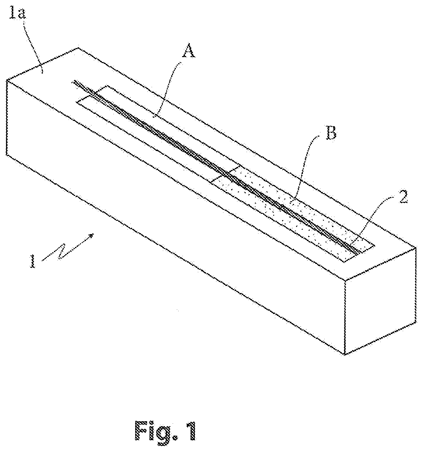

On a illustré (figure 1), un exemple d'une pièce donné à titre indicatif nullement limitatif, désignée dans son ensemble (1) et comprenant une face nitrurée (la). Sur cette face nitrurée (la) une zone (A) a été traitée selon une première phase du procédé selon l'invention et une zone (B) selon la première phase et une deuxième phase du procédé de traitement. Un cordon de soudure (2) est réalisé sur la totalité de la longueur de la pièce (1) tant au niveau de la zone nitrurée (la) que des zones traitées selon le procédé en une ou deux phases de l'invention, caractérisé respectivement par les zones (A) et (B).

On rappelle que selon l'invention, le but recherché est de modifier la structure de la pièce (1) par transformation de la couche superficielle afin de permettre au niveau de la zone ainsi traitée de réaliser tout type de soudure.

Ainsi la zone (A) est soumise à une première étape selon laquelle on déplace au moins un faisceau de laser selon au moins une passe jusqu'à enlèvement total de la couche superficielle de cette zone (la). Des résultats avantageux ont été obtenus lorsque l'on réalise plusieurs passes avec interligne entre les passes compris entre 0,01 mm et 0,05 mm et, préférentiellement avec un interligne de 0,02 mm. Ce procédé est mis en oeuvre au moyen d'un laser fibré et pulsé 20 W réglé à environ 20 kHz et à 50 % de sa puissance, défocalisé de 5 mm et soumis à une vitesse d'avance d'environ 300 mm/s.

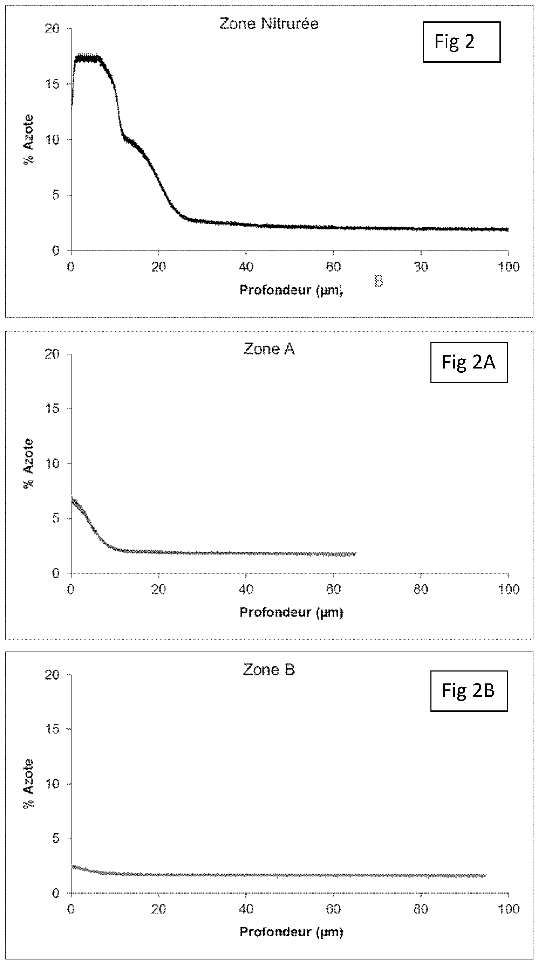

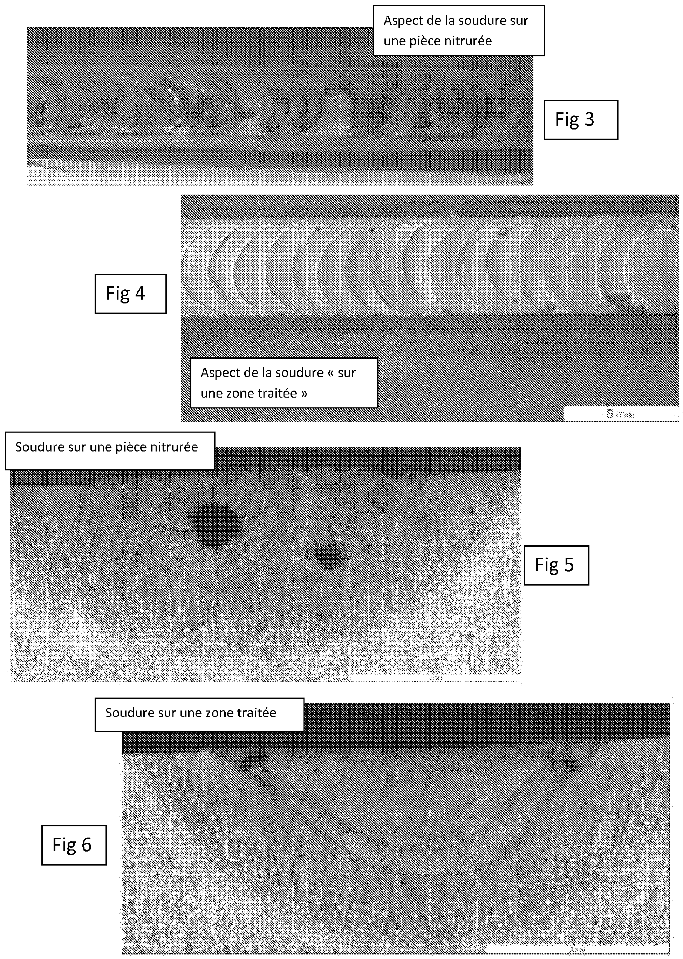

Pour le cas d'un soudage TIG, on renvoie aux courbes des figures 2, 2A et 2B et aux coupes métallographiques, (figures 5 et 6). Cette figure 6 montre une soudure TIG au niveau de la zone (A) traitée selon la première étape du procédé de traitement, à comparer avec la figure 5 qui montre une soudure TIG au niveau de la surface nitrurée non traitée.

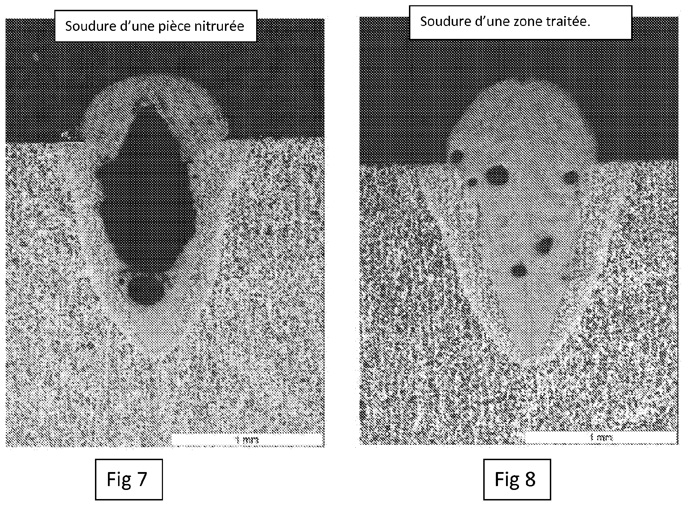

Pour le cas d'un soudage laser, on renvoie aux courbes des figures 2, 2A et 2B et aux coupes métallographiques, (figures 7 et 8). Cette figure 8 montre une soudure laser au niveau de la zone (A) traitée selon la première étape du procédé de traitement, à comparer avec la figure 7 qui montre une soudure laser au niveau de la surface nitrurée non traitée.

La zone (B) de la pièce (1) est préalablement traitée selon la première étape du procédé de l'invention telle qu'indiquée ci-dessus.

Cette zone est ensuite soumise à une deuxième étape selon laquelle on déplace le faisceau laser selon au moins une passe pour permettre une modification de la répartition de la concentration d'azote au niveau de cette zone dans la couche de diffusion sous-jacente. Pour cette deuxième étape on utilise toujours le même laser fibré pulsé 20 W avec des réglages différents.

Ainsi, le laser est réglé à environ 200 kHz et à 100 % de sa puissance défocalisé de 5 mm et soumis à une vitesse d'avance comprise entre 1 mm/s et 10 mm/s. Cette deuxième étape se réalise en une seule passe.

On renvoie à la courbe de la figure 2B qui met en évidence la réduction supplémentaire du taux d'azote entre les deux étapes du procédé. Cette perte significative d'azote étant difficile à atteindre avec les réglages de la première étape.

Il ressort de ces différents essais que le soudage sur une surface nitrurée génère un aspect perturbé irrégulier présentant des trous en surface (figure 3), il s'agit de soufflures débouchantes (figure 5).

Ces coupes métallographiques montrent des résultats performants dans le cas de la soudure TIG, et également dans une moindre mesure dans le cas de la soudure laser.

En associant selon l'invention une deuxième étape au procédé, il a été également constaté une modification de la répartition de la concentration d'azote. Cette modification se caractérise par la réduction du taux d'azote dans la couche de diffusion sous-jacente.

Il ressort des caractéristiques du procédé selon l'invention que le traitement modifie la structure de la pièce par transformation de la couche superficielle permettant, par conséquent, de souder une pièce nitrurée.

Cette opération par laser permet de traiter tout type de pièces avec une très grande précision, y compris des zones spécifiques ou de formes complexes.

En résumé et en considérant le fait que la nitruration n'est pas compatible à une opération de soudage, le procédé de traitement permet, en une première étape, la transformation de la couche superficielle et la modification de la répartition de la concentration de l'azote dans la zone de diffusion. Il en résulte des résultats performants en soudure TIG mais également en soudure laser. Cette première étape est suffisante pour rendre la zone compatible au soudage.

Selon la deuxième étape du procédé de traitement selon l'invention, il est possible de modifier la répartition de la concentration de l'azote en réduisant le taux d'azote dans la couche de diffusion. A cet égard, de manière surprenante et inattendue, il est apparu qu'une diminution de la concentration d'azote dans la zone de diffusion donne un résultat inverse, à savoir, que la soudure est de moins bonne qualité. Cette réduction du taux d'azote dans la couche de diffusion peut s'avérer importante pour certaines applications, par exemple pour diminuer la fragilité des pièces.

## Revendications

1. Procédé de traitement d'une pièce d'acier nitrurée/nitrocarburée, selon lequel :
- on soumet une partie au moins de la pièce à une première étape selon laquelle on déplace au moins un faisceau laser selon au moins une passe sur ladite partie, jusqu'à transformation partielle ou totale de la couche superficielle de la partie considérée et modification de la répartition de la concentration de l'azote dans la zone de diffusion,
- on soumet la partie au moins traitée par laser pour transformer la couche superficielle, à une deuxième étape selon laquelle on déplace au moins un faisceau laser selon au moins une passe sur ladite partie pour permettre de réduire la concentration d'azote dans la couche de diffusion sous-jacente.

2. Procédé selon la revendication 1, ***caractérisé*** en que pour la première étape on réalise plusieurs passes avec un interligne entre les passes compris entre 0,01 mm et 0,05 mm.

3. Procédé selon la revendication 2, ***caractérisé*** en que l'interligne est avantageusement de 0,02 mm.

4. Procédé selon la revendication 1, ***caractérisé*** en que pour la première étape on utilise un laser fibré pulsé 20 W réglé à environ 20 KHz et à 50 % de sa puissance, défocalisé de 5 mm et soumis à une vitesse d'avance d'environ 300 mm/s.

5. Procédé selon la revendication 1, ***caractérisé*** en que pour la deuxième étape, le laser fibré pulsé 20 W est réglé à environ 200 KHz et à 100 % de sa puissance, défocalisé de 5 mm et soumis à une vitesse d'avance comprise entre 1 mm/s et 10 mm/s.

6. Procédé selon la revendication 1, ***caractérisé*** en que pour la deuxième étape on réalise une seule passe.

7. Procédé de soudage d'une pièce nitrurée/nitrocarburée selon lequel :
- on soumet une partie au moins de la pièce à une première étape selon laquelle on déplace au moins un faisceau laser selon au moins une passe sur ladite partie, jusqu'à transformation partielle ou totale de la couche superficielle de la partie considérée et modification de la répartition de la concentration de l'azote dans la zone de diffusion,
- on soumet la partie au moins traitée par laser pour transformer la couche superficielle, à une deuxième étape selon laquelle on déplace au moins un faisceau laser selon au moins une passe sur ladite partie pour permettre de réduire la concentration d'azote dans la couche de diffusion sous-jacente,
- on réalise une soudure au niveau de la partie traitée de la pièce.

8. Procédé selon la revendication 7, ***caractérisé* en ce que** la soudure est réalisée pour soudage TIG.

## Patentansprüche

1. Verfahren zur Behandlung eines nitrierten / nitrocarburierten Stahlteils, gemäß welchem:
- zumindest ein Abschnitt des Teils einem ersten Schritt unterzogen wird, bei dem mindestens ein Laserstrahl in mindestens einem Durchgang über diesen Abschnitt bewegt wird, bis es zu einer teilweisen oder vollständigen Umformung der Oberflächenschicht des betrachteten Abschnitts und einer Veränderung der Verteilung der Stickstoffkonzentration in der Diffusionszone kommt,
- der zumindest mit Laser behandelte Abschnitt zwecks Umformung der Oberflächenschicht einem zweiten Schritt unterzogen wird, bei dem mindestens ein Laserstrahl in mindestens einem Durchgang über diesen Abschnitt bewegt wird, um eine Verringerung der Stickstoffkonzentration in der darunterliegenden Diffusionsschicht zu ermöglichen.

2. Verfahren gemäß Anspruch 1, **dadurch gekennzeichnet, dass** für den ersten Schritt mehrere Durchgänge mit einem Abstand zwischen den Durchgängen zwischen 0,01 mm und 0,05 mm durchgeführt werden.

3. Verfahren gemäß Anspruch 2, **dadurch gekennzeichnet, dass** der Abstand vorteilhafterweise 0,02 mm beträgt.

4. Verfahren gemäß Anspruch 1, **dadurch gekennzeichnet, dass** für den ersten Schritt ein gepulster Faserlaser von 20 W verwendet wird, der auf etwa 20 KHz und 50% seiner Leistung eingestellt, um 5 mm defokussiert und einer Vorschubgeschwindigkeit von etwa 300 mm/s ausgesetzt wird.

5. Verfahren gemäß Anspruch 1, **dadurch gekennzeichnet, dass** für den zweiten Schritt der gepulste Faserlaser von 20 W auf etwa 200 KHz und 100% seiner Leistung eingestellt, um 5 mm defokussiert und einer Vorschubgeschwindigkeit im Bereich zwischen 1 mm/s und 10 mm/s ausgesetzt wird.

6. Verfahren gemäß Anspruch 1, **dadurch gekennzeichnet, dass** für den zweiten Schritt ein einziger Durchgang erfolgt.

7. Verfahren zum Schweißen eines nitrierten / nitrocarburierten Teils, gemäß welchem:
- zumindest ein Abschnitt des Teils einem ersten Schritt unterzogen wird, bei dem mindestens ein Laserstrahl in mindestens einem Durchgang über diesen Abschnitt bewegt wird, bis es zu einer teilweisen oder vollständigen Umformung der Oberflächenschicht des betrachteten Abschnitts und einer Veränderung der Verteilung der Stickstoffkonzentration in der Diffusionszone kommt,
- der zumindest mit Laser behandelte Abschnitt zwecks Umformung der Oberflächenschicht einem zweiten Schritt unterzogen wird, bei dem mindestens ein Laserstrahl in mindestens einem Durchgang über diesen Abschnitt bewegt wird, um eine Verringerung der Stickstoffkonzentration in der darunterliegenden Diffusionsschicht zu ermöglichen,
- eine Schweißnaht am behandelten Abschnitt des Teils geschaffen wird.

8. Verfahren gemäß Anspruch 7, **dadurch gekennzeichnet, dass** die Schweißnaht durch WIG-Schweißen geschaffen wird.

## Claims

1. A method of treating a nitrided/nitrocarburized steel workpiece, which method consists in:
- subjecting at least a portion of the workpiece to a first step in which at least one laser beam is moved in at least one pass over said portion, until the surface layer of the considered portion is transformed in part or in full, and until the distribution of the nitrogen concentration in the diffusion zone is modified; and
- subjecting the portion at least treated by laser for transforming the surface layer to a second step in which at least one laser beam is moved in at least one pass over said portion so as to enable the nitrogen concentration in the underlying diffusion layer to be reduced.

2. A method according to claim 1, ***characterized* in that**, for the first step, a plurality of passes are made with an inter-line space between the passes comprised between 0.01 mm and 0.05 mm.

3. A method according to claim 2, ***characterized* in that** the inter-line space is advantageously 0.02 mm.

4. A method according to claim 1, ***characterized* in that**, for the first step, a 20-W fiber and pulse laser is used that is set at about 20 kHz and at 50% of its power, defocused by 5 mm and subjected to a speed of advance of about 300 mm/s.

5. A method according to claim 1, ***characterized* in that**, for the second step, a 20-W fiber and pulse laser is used that is set at about 200 kHz and at 100% of its power, defocused by 5 mm and subjected to a speed of advance comprised between 1 mm/s and 10 mm/s.

6. A method according to claim 1, ***characterized* in that**, for the second step, a single pass is performed.

7. A method of welding a nitrided/nitrocarburized workpiece, which method consists in:
- subjecting at least a portion of the workpiece to a first step in which at least one laser beam is moved in at least one pass over said portion, until the surface layer of the considered portion is transformed in part or in full, and until the distribution of the nitrogen concentration in the diffusion zone is modified;
- subjecting the portion at least treated by laser for transforming the surface layer to a second step in which at least one laser beam is moved in at least one pass over said portion so as to enable the nitrogen concentration in the underlying diffusion layer to be reduced;
- forming a weld at the treated portion of the workpiece.

8. A method according to claim 7, ***characterized* in that** the weld is formed by TIG welding.
